# EUROPEAN PATENT APPLICATION

(11) **EP 4 811 264 A1**
(43) Date of publication of application: **23.09.2026**
(21) Application number: 23963150.0
(22) Date of filing: 27.12.2023
(51) Int. Cl.: G06Q 50/08

(54) **DISCHARGE AMOUNT CALCULATION DEVICE, DISCHARGE AMOUNT CALCULATION METHOD, AND DISCHARGE AMOUNT CALCULATION PROGRAM**

(71) Applicant: Mitsubishi Electric Corporation, Tokyo 100-8310 (JP)
(72) Inventor: KAWANO, Hiroki, Tokyo 100-8310 (JP)
(74) Representative: Pfenning, Meinig & Partner mbB
(86) International application number: PCT/JP2023/047022
(87) International publication number: WO 2025/141801

(57) **Abstract**

An emission amount calculation unit (21) calculates a CO2 emission amount in each of a plurality of phases from construction to disposal of a target building. A means setting unit (23) sets a reduction means that has an effect of reducing a CO2 emission amount for a setting phase, which is one phase of the plurality of phases. An influence identification unit (24) identifies an influenced phase in which the reduction means that has been set influences a CO2 emission amount and which includes a phase other than the setting phase. The emission amount calculation unit (21) recalculates a CO2 emission amount for the identified influenced phase.

## Description

### Technical Field

The present disclosure relates to a technology that assists in formulating a plan to keep a CO2 emission amount of a building equal to or less than a target value.

### Background Art

The definitions of LCCM and ZCB have been established towards future carbon neutrality. LCCM is an abbreviation for Life Cycle Carbon Minus. ZCB is an abbreviation for Zero Carbon Building. In LCCM and ZCB, it is defined to achieve a negative CO2 balance over the life cycle of a building. The CO2 emission amount referred to here is an amount obtained by subtracting a reduction amount of reduction in CO2 emissions from an emission amount of CO2 emissions. The reduction amount is, for example, an amount of CO2 reduced by self-consumption of solar power generation or selling surplus electricity. The life cycle of a building is from construction to disposal of the building, specifically construction, operation, renovation, and disposal. The life cycle of a building may include raw material procurement prior to construction.

In order to achieve LCCM and ZCB, it is necessary to formulate a plan that will keep the CO2 emission amount equal to or less than the target value. To formulate this plan, it is necessary to predict a CO2 emission amount in each phase of the life cycle of a building. Patent Literature 1 describes calculating a CO2 emission amount in each phase of the life cycle a building based on design data of the building.

### Citation List

### Patent Literature

Patent Literature 1: JP 2015-041117 A

### Summary of Invention

### Technical Problem

In the formulated plan, if a value obtained by subtracting a CO2 reduction amount from a CO2 emission amount does not fall below the target value, the introduction of a reduction means to reduce the CO2 emission amount is incorporated into the plan. It is necessary to predict a CO2 emission amount when the reduction means is introduced, but recalculating the CO2 emission amount in every phase requires a long processing time.

It may also be considered to recalculate the CO2 emission amount only for a phase in which the reduction means is introduced. However, depending on the reduction means, the reduction means influences not only the CO2 emission amount in the phase where it is introduced, but also CO2 emission amounts in other phases. Therefore, if the CO2 emission amount is recalculated only for the phase where the reduction means is introduced, it will be impossible to predict an appropriate CO2 reduction amount.

An object of the present disclosure is to make it possible to accurately predict a CO2 emission amount when a reduction means is introduced while reducing a processing time.

### Solution to Problem

An emission amount calculation device according to the present disclosure includes:
an emission amount calculation unit to calculate a CO2 emission amount in each of a plurality of phases from construction to disposal of a target building;
a means setting unit to set a reduction means that has an effect of reducing a CO2 emission amount for a setting phase, which is one phase of the plurality of phases; and
an influence identification unit to identify an influenced phase in which the reduction means set by the means setting unit influences a CO2 emission amount, the influenced phase including a phase other than the setting phase,
wherein the emission amount calculation unit recalculates a CO2 emission amount for the influenced phase identified by the influence identification unit, using the reduction means set by the means setting unit.

### Advantageous Effects of Invention

In the present disclosure, an influenced phase in which a reduction means influences a CO2 emission amount is identified, and the CO2 emission amount is recalculated for the influenced phase. This makes it possible to accurately predict a CO2 emission amount when the reduction means is introduced while reducing a processing time.

### Brief Description of Drawings

Fig. 1 is a configuration diagram of an emission amount calculation device 10 according to Embodiment 1.
Fig. 2 is a flowchart illustrating a flow of processing by the emission amount calculation device 10 according to Embodiment 1.
Fig. 3 is a diagram illustrating an example of reduction means according to Embodiment 1.
Fig. 4 is a diagram describing influence range information 34 according to Embodiment 1.
Fig. 5 is a configuration diagram of the emission amount calculation device 10 according to Embodiment 2.
Fig. 6 is a flowchart illustrating a flow of processing by the emission amount calculation device 10 according to Embodiment 2.
Fig. 7 is a flowchart illustrating a flow of processing by the emission amount calculation device 10 according to Embodiment 3.
Fig. 8 is a diagram describing the influence range information 34 according to Embodiment 3.
Fig. 9 is a flowchart illustrating a flow of processing by the emission amount calculation device 10 according to Embodiment 4.
Fig. 10 is a configuration diagram of the emission amount calculation device 10 according to Embodiment 5.
Fig. 11 is a flowchart illustrating a flow of processing by the emission amount calculation device 10 according to Embodiment 5.

### Description of Embodiments

### Embodiment 1.

An emission amount calculation device 10 that calculates a CO2 emission amount of a target building will be described. Embodiment 1 will be described assuming that the life cycle of a building includes four phases: a construction phase, an operation phase, a renovation phase, and a disposal phase. The construction phase is a phase related to construction of the target building, including manufacturing of materials for the target building and erection of the target building. The operation phase is a phase related to operation of energy, light, heat, water, and so on of the constructed target building. The renovation phase is a phase related to renovations such as repairs and replacements of a structural frame and equipment of the constructed target building. The disposal phase is a phase related to disposal such as demolition and removal of the target building that has ceased operation and disposal of waste.

### *** Description of Configuration ***

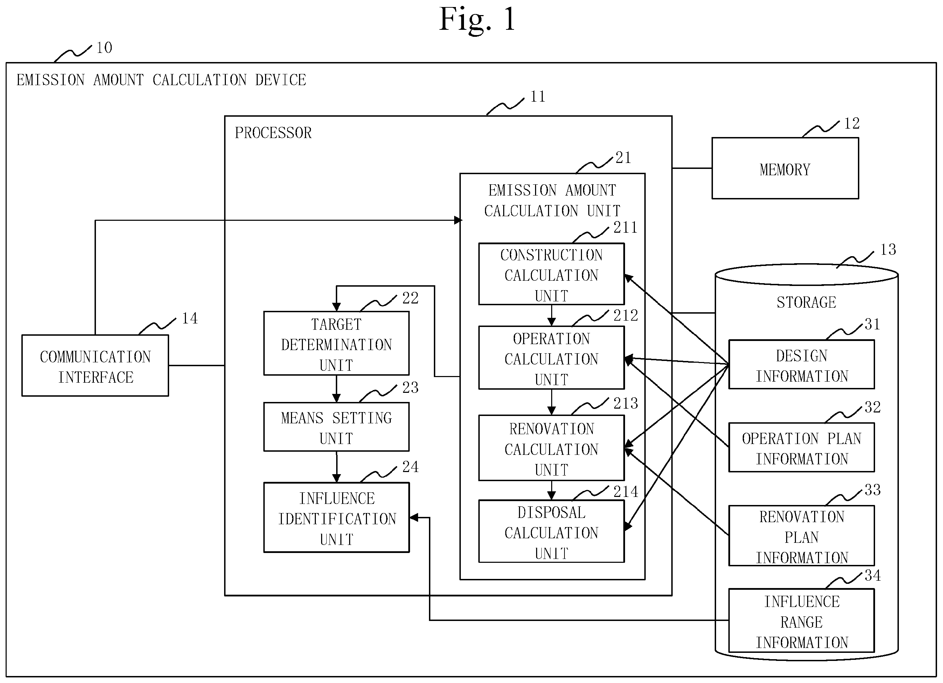

Referring to Fig. 1, a configuration of the emission amount calculation device 10 according to Embodiment 1 will be described.

The emission amount calculation device 10 is a computer.

The emission amount calculation device 10 includes hardware of a processor 11, a memory 12, a storage 13, and a communication interface 14. The processor 11 is connected with other hardware components via signal lines, and controls these other hardware components.

The processor 11 is an IC that performs processing. IC is an abbreviation for integrated circuit. Specific examples of the processor 11 are a CPU, a DSP, and a GPU. CPU is an abbreviation for central processing unit. DSP is an abbreviation for digital signal processor. GPU is an abbreviation for graphics processing unit.

The memory 12 is a storage device to temporarily store data. Specific examples of the memory 12 are an SRAM and a DRAM. SRAM is an abbreviation for static random access memory. DRAM is an abbreviation for dynamic random access memory.

The storage 13 is a storage device to store data. A specific example of the storage 13 is an HDD. HDD is an abbreviation for hard disk drive. Alternatively, the storage 13 may be a portable recording medium such as an SD (registered trademark) memory card, CompactFlash (registered trademark), a NAND flash, a flexible disk, an optical disc, a compact disc, a Blu-ray (registered trademark) disc, or a DVD. SD is an abbreviation for Secure Digital. DVD is an abbreviation for digital versatile disk.

The communication interface 14 is an interface for communicating with external devices. Specific examples of the communication interface 14 are an Ethernet (registered trademark) port, a USB port, and an HDMI (registered trademark) port. USB is an abbreviation for Universal Serial Bus. HDMI is an abbreviation for High-Definition Multimedia Interface.

The emission amount calculation device 10 includes, as functional components, an emission amount calculation unit 21, a target determination unit 22, a means setting unit 23, and an influence identification unit 24. The functions of the functional components of the emission amount calculation device 10 are realized by software. The emission amount calculation unit 21 includes a construction calculation unit 211, an operation calculation unit 212, a renovation calculation unit 213, and a disposal calculation unit 214.

The storage 13 stores programs that realize the functions of the functional components of the emission amount calculation device 10. These programs are loaded into the memory 12 by the processor 11 and executed by the processor 11. This realizes the functions of the functional components of the emission amount calculation device 10.

The storage 13 stores design information 31, operation plan information 32, renovation plan information 33, and influence range information 34.

In Fig. 1, only one processor 11 is illustrated. However, there may be a plurality of processors 11, and the plurality of processors 11 may cooperate to execute the programs that realize the functions.

### *** Description of Operation ***

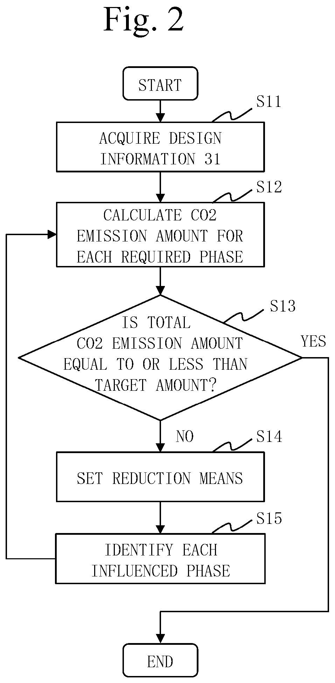

Referring to Figs. 2 to 4, the operation of the emission amount calculation device 10 according to Embodiment 1 will be described.

A procedure for the operation of the emission amount calculation device 10 according to Embodiment 1 is equivalent to an emission amount calculation method according to Embodiment 1. A program that realizes the operation of the emission amount calculation device 10 according to Embodiment 1 is equivalent to an emission amount calculation program according to Embodiment 1.

Referring to Fig. 2, a flow of processing by the emission amount calculation device 10 according to Embodiment 1 will be described.

### (Step S11: Design information acquisition process)

The emission amount calculation unit 21 acquires the design information 31, the operation plan information 32, and the renovation plan information 33 of the target building.

Specifically, the emission amount calculation unit 21 acquires the design information 31, the operation plan information 32, and the renovation plan information 33 of the target building that are input by a user. The user is, for example, a designer of the building. The design information 31 is information including BIM data, CAD data, and information indicating a total floor area, the number of floors, and so on. BIM is an abbreviation for building information modeling. CAD is an abbreviation for computer-aided design. The operation plan information 32 is information that defines operation methods for energy, light, heat, and water as well as related equipment of the target building. The renovation plan information 33 is information that defines a renovation method, renovation timing, and so on for each part of the target building.

### (Step S12: Emission amount calculation process)

The emission amount calculation unit 21 calculates a CO2 emission amount in each of a plurality of phases from construction to disposal of the target building based on the design information 31, the operation plan information 32, and the renovation plan information 33 that are acquired in step S11.

Specifically, the construction calculation unit 211 calculates the CO2 emission amount in the construction phase of the target building based on the design information 31. The operation calculation unit 212 calculates the CO2 emission amount in the operation phase of the target building based on the design information 31 and the operation plan information 32. The renovation calculation unit 213 calculates the CO2 emission amount in the renovation phase of the target building based on the design information 31 and the renovation plan information 33. The disposal calculation unit 214 calculates the CO2 emission amount in the disposal phase of the target building based on the design information 31.

The CO2 emission amount includes not only a CO2 emission amount generated by consumption of energy or the like, but also a CO2 emission amount reduced by generating electricity. That is, the CO2 emission amount is an amount obtained by subtracting a reduction amount of reduction in CO2 emissions from an emission amount of CO2 emissions. The reduction amount is achieved, for example, by generating electricity by introducing solar power generation.

### (Step S13: Target determination process)

The target determination unit 22 determines whether a total amount of the CO2 emission amounts in the individual phases of the plurality of phases calculated in step S22 is equal to or less than a target amount.

Specifically, the target determination unit 22 calculates the total amount by adding up the CO2 emission amounts in the individual phases calculated in step S22. That is, the target determination unit 22 calculates the total amount by adding up the CO2 emission amount in the construction phase, the CO2 emission amount in the operation phase, the CO2 emission amount in the renovation phase, and the CO2 emission amount in the disposal phase. The target determination unit 22 determines whether the total amount is equal to or less than the target amount. The target amount is a value set in advance. For example, if the objective is to achieve LCCM and ZCB, the target amount is 0.

If the total amount is equal to or less than the target amount, the target determination unit 22 presents the reduction means set so far in step S14 to be described later, and ends the process. If the total amount exceeds the target amount, the target determination unit 22 advances the process to step S14.

### (Step S14: Means setting process)

The means setting unit 23 sets a reduction means that has an effect of reducing the CO2 emission amount for a setting phase, which is one of the plurality of phases.

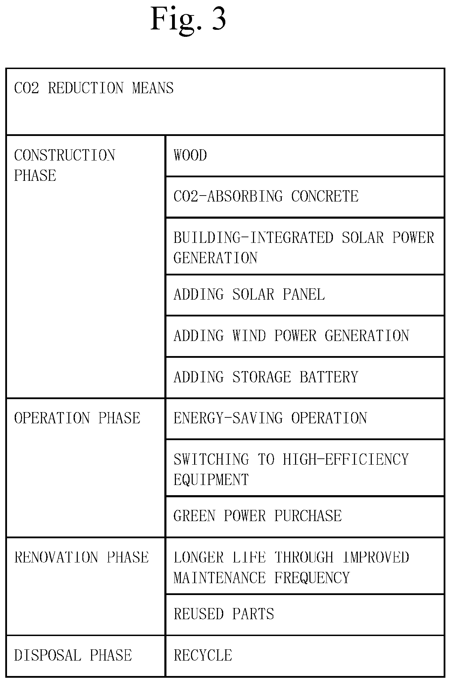

Specifically, the means setting unit 23 sets one reduction means to be used from among a plurality of reduction means prepared in advance for each phase, as illustrated in Fig. 3. For example, the means setting unit 23 sets a reduction means specified by the user.

### (Step S15: Influence identification process)

The influence identification unit 24 identifies an influenced phase, which is a phase in which the reduction means set in step S14 influences the CO2 emission amount. The influence identification unit 24 identifies each influenced phase, including phases other than the setting phase corresponding to the reduction means set in step S14.

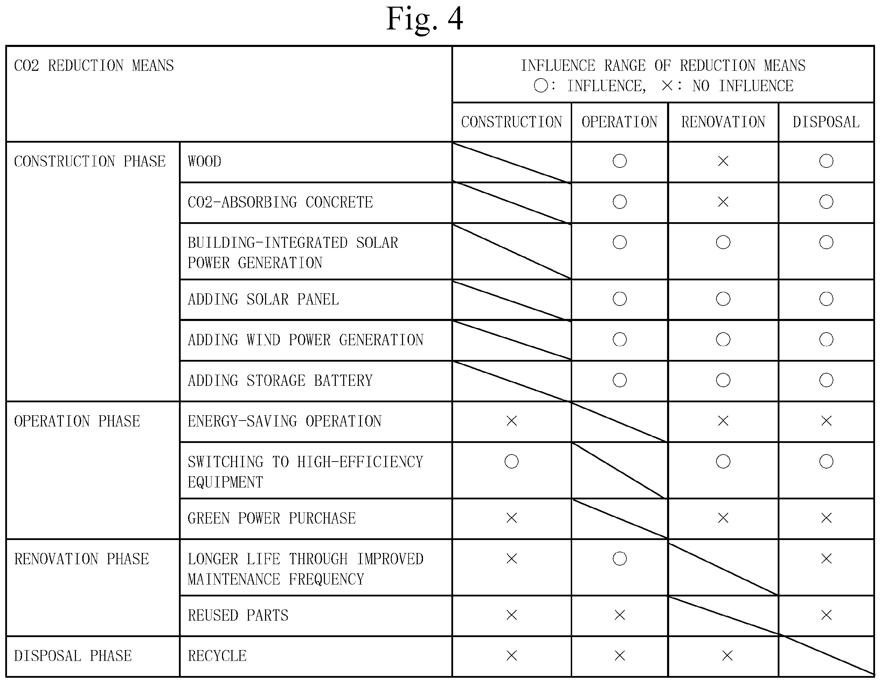

Specifically, the influence identification unit 24 identifies each influenced phase by referring to the influence range information 34. As illustrated in Fig. 4, the influence range information 34 indicates phases in which each of a plurality of reduction means influences the CO2 emission amount. In Fig. 4, a diagonal line is drawn for each setting phase, which is a phase corresponding to each reduction means, because it is obvious that there is an effect of reducing the CO2 emission amount. For phases other than the setting phase, "influence" (○) or "no influence" (×) is set. "Influence" means that the CO2 emission amount will increase or decrease.

The following are specific examples where the CO2 emission amount is influenced in phases other than the setting phase.
(1) In the construction phase, changing the material from steel to wood changes thermal insulation properties. This influences the CO2 emission amount in the operation phase.
(2) In the operation phase, changing the operating hours of equipment changes the service life of the equipment. This influences the CO2 emission amount in the renovation phase.
(3) In the renovation phase, the renovation cycle is extended from 10 years to 13 years. In this case, the CO2 emission amount in the renovation phase is reduced. However, old equipment will be in operation from the 11th year to the 13th year after installation, which influences the CO2 emission amount in the operation phase.

The influence identification unit 24 instructs the emission amount calculation unit 21 to recalculate the CO2 emission amount for each identified influenced phase, and returns the process to step S12. Then, in step S12, the emission amount calculation unit 21 recalculates the CO2 emission amount using the reduction means set in step S14.

In this way, reduction means are added until the total amount of the CO2 emission amounts in the individual phases is equal to or less than the target amount. This gradually refines the plan for each phase, eventually leading to plans that make the total amount of the CO2 emission amounts equal to or less than the target amount.

Methods for calculating the CO2 emission amount in each phase in step S12 of Fig. 2 will be described.

### (Construction phase)

The emission amount calculation unit 21 calculates the CO2 emission amount for each building material such as concrete and steel frame. First, the emission amount calculation unit 21 calculates a quantity of each building material based on the design information 31. Then, for each building material, the emission amount calculation unit 21 calculates the CO2 emission amount for the building material by multiplying the calculated quantity by a CO2 conversion factor.

The emission amount calculation unit 21 also calculates the CO2 emission amount associated with the transportation of each building material. For each building material, the emission amount calculation unit 21 calculates the CO2 emission amount associated with the transportation of the building material by calculating a value by multiplying a transportation quantity by a transportation distance and then multiplying the calculated value by a CO2 conversion factor. If a production location can be identified for each building material, the emission amount calculation unit 21 identifies a distance from the production location to a construction site as the transportation distance. If the production location cannot be identified, the emission amount calculation unit 21 may use a predetermined distance as the transportation distance.

The emission amount calculation unit 21 calculates the CO2 emission amount in the construction phase by adding up the CO2 emission amount of each building material and the CO2 emission amount associated with the transportation of each building material.

As the CO2 conversion factor, information set in an emission intensity database may be used.

### (Operation phase)

The emission amount calculation unit 21 acquires a layout, an area, and insulation properties of walls and windows of each room, capacities of equipment set in each room, and so on from the design information 31. The emission amount calculation unit 21 also acquires information on an average annual climate of an area where the target building is located from a server of the Japan Meteorological Agency or the like. The emission amount calculation unit 21 uses the acquired information to estimate annual energy consumption of each piece of equipment when it is operated according to the plan indicated by the operation plan information 32. Each piece of equipment is an air conditioner, a ventilation system, a lighting system, a water heater, an elevator, or the like. One way to estimate energy consumption is to use a simulator that replicates a digital twin of the building and estimates energy consumption of each piece of equipment.

The emission amount calculation unit 21 calculates energy consumption from the construction to disposal of the target building based on the estimated annual energy consumption. The period from the construction to disposal of the target building is, for example, a period of 50 years. The emission amount calculation unit 21 may calculate the energy consumption for this period by multiplying the annual energy consumption by the number of years in the period from the construction to disposal of the target building. Alternatively, for each year since the construction, the energy consumption for that year may be calculated by multiplying the annual energy consumption by a factor that takes into account the deterioration of each piece of equipment. Then, the calculated energy consumption values may be added up to calculate the energy consumption for that period.

The emission amount calculation unit 21 calculates the CO2 emission amount by multiplying the energy consumption from the construction to disposal of the target building by a CO2 conversion factor. As the CO2 conversion factor, a value according to an electric power company with which the target building has a contract may be used.

In the operation phase, there is a possibility that a means to reduce the CO2 emission amount is provided. For example, there is a possibility that solar power generation equipment is installed in the target building. If the solar power generation equipment is installed, the emission amount calculation unit 21 acquires a capacity, an installation position, an installation circumference, and an installation angle of the solar power generation equipment from the design information 31. The emission amount calculation unit 21 also acquires an annual average sunshine amount and sunshine hours in the area where the target building is located from a server of the Japan Meteorological Agency or the like. The emission amount calculation unit 21 uses the acquired information to estimate power generation energy. The emission amount calculation unit 21 calculates a CO2 reduction amount by multiplying the estimated power generation energy by a CO2 conversion factor.

Then, the emission amount calculation unit 21 subtracts the reduction amount from the CO2 emission amount described above to calculate the CO2 emission amount in the operational phase.

### (Renovation phase)

The emission amount calculation unit 21 identifies the number of updates and a frequency of updates for each building material and each piece of equipment based on the renovation plan information 33. In the renovation plan information 33, update timings are set for each building material and each piece of equipment based on their lifespans and so on. For each building material and each piece of equipment, the emission amount calculation unit 21 calculates the CO2 emission amount by calculating a value by multiplying the number of updates by the frequency of updates and then multiplying the calculated value by a CO2 conversion factor. The emission amount calculation unit 21 calculates the CO2 emission amount in the renovation phase by adding up the CO2 emission amounts calculated for each building material and each piece of equipment.

The CO2 conversion factor may be obtained from the emission intensity database used for the construction phase.

### (Disposal phase)

The emission amount calculation unit 21 calculates the total floor area of the target building and an amount of waste based on the design information 31. The emission amount calculation unit 21 calculates a CO2 conversion factor in the disposal phase by multiplying the total floor area and the amount of waste by a CO2 conversion factor for demolition and landfilling.

As the CO2 conversion factor, information set in the emission intensity database used to calculate the CO2 emission amount in the construction phase may be used.

In each phase, costs may be calculated in addition to the CO2 emission amount. Presenting the calculated costs to the user facilitates selection of a reduction means taking the costs into consideration.

Methods for calculating costs of each phase will be described.

### (Construction phase)

The emission amount calculation unit 21 calculates a cost for each building material and each piece of equipment. First, the emission amount calculation unit 21 calculates a quantity of each building material and each piece of equipment based on the design information 31. Then, for each building material and each piece of equipment, the emission amount calculation unit 21 calculates the cost for the building material or the piece of equipment by multiplying the calculated quantity by a unit price.

The emission amount calculation unit 21 calculates a cost associated with the transportation of each building material and each piece of equipment. For each building material and each piece of equipment, the emission amount calculation unit 21 calculates the number of trucks based on a transportation volume. The emission amount calculation unit 21 calculates the cost associated with the transportation by multiplying the number of trucks by a transportation distance and then multiplying the result by a transportation unit price (gasoline cost + labor cost).

The emission amount calculation unit 21 calculates a cost (labor cost) associated with construction work. The emission amount calculation unit 21 calculates the total floor area of the target building based on the design information 31. The emission amount calculation unit 21 calculate the cost associated with the work by multiplying the total floor area by a work unit price (yen/m²).

The emission amount calculation unit 21 calculates the cost in the construction phase by adding up the costs of each building material and each piece of equipment, the costs associated with the transportation of each building material and each piece of equipment, and the cost associated with the construction work.

### (Operation phase)

The emission amount calculation unit 21 calculates energy purchased and energy sold in one year based on energy consumed and energy generated in one year. The emission amount calculation unit 21 calculates a cost of purchasing electricity by calculating contracted electricity (kW) and electricity consumption (kWh) based on the energy purchased in one year, and multiplying them by a basic charge (yen/kW) and an electricity volume charge (yen/kWh), respectively. The emission amount calculation unit 21 also calculates a cost of selling electricity by multiplying the energy sold in one year by an electricity selling price (yen/kWh). The costs of purchasing electricity and selling electricity are added together to calculate the cost in the operation phase.

### (Renovation phase)

The emission amount calculation unit 21 identifies the number of updates and a frequency of updates for each building material and each piece of equipment based on the renovation plan information 33. For each building material and each piece of equipment, the emission amount calculation unit 21 calculates a cost of the building material or the equipment by calculating a value by multiplying the number of updates by the frequency of updates and then multiplying the calculated value by a unit price.

The emission amount calculation unit 21 also calculates a cost associated with transportation and a cost associated with work, similarly to the construction phase. Then, the emission amount calculation unit 21 calculates the cost in the renovation phase by adding up the costs of each building material and each piece of equipment, the costs associated with the transportation of each building material and each piece of equipment, and the cost associated with the work.

### (Disposal phase)

The emission amount calculation unit 21 calculates the total floor area and an amount of waste of the target building based on the design information 31. The emission amount calculation unit 21 calculates the cost in the disposal phase by multiplying the total floor area and the amount of waste by a unit price.

Methods for selecting a reduction means in step S14 of Fig. 2 will be described.

As described above, the user may be caused to select any reduction means. However, the means setting unit 23 may arrange that reduction means extracted by one method of the following (Method 1) to (Method 3) are preferentially selected. For example, the means setting unit 23 may display the reduction means extracted by one method of the following (Method 1) to (Method 3), and cause the user to select a reduction means to be set. Alternatively, the means setting unit 23 may set any reduction means among the reduction means extracted by one method of the following (Method 1) to (Method 3).

### (Method 1)

The means setting unit 23 extracts reduction means that shorten a processing time required for recalculating the CO2 emission amount. The reduction means that shorten the processing time required for recalculating the CO2 emission amount are reduction means that influence no or few phases. For example, the means setting unit 23 extracts a reduction means that influences the smallest number of phases.

### (Method 2)

The means setting unit 23 extracts reduction means that result in a large reduction amount in the CO2 emission amount. Specifically, a reference value for the reduction amount in the CO2 emission amount is stored for each reduction means in a list of reduction means illustrated in Fig. 3. The means setting unit 23 refers to this reference value and extracts a reduction means with the largest reduction amount, a standard number of reduction means in descending order of the reduction amount, or all reduction means with reduction amounts larger than a standard amount.

The reference value for the reduction amount in the CO2 emission amount is calculated by averaging results of estimating reduction amounts for multiple buildings designed in the past by the total floor area or the like.

By preferentially selecting reduction means that result in a large reduction amount, the total amount can be reduced to the target amount or less with fewer reduction means. As a result, the processing time required for recalculating the CO2 emission amount can be shortened.

### (Method 3)

The means setting unit 23 extracts reduction means with low costs. Specifically, a reference value for the cost for each reduction means is stored in the list of reduction means illustrated in Fig. 3. The means setting unit 23 refers to this reference value and extracts a reduction means with the lowest cost, a standard number of reduction means in ascending order of the cost, or all reduction means with costs less than a standard value.

The reference value for the cost is calculated by averaging results of estimating costs for multiple buildings designed in the past by the total floor area or the like.

### *** Effects of Embodiment 1 ***

As described above, the emission amount calculation device 10 according to Embodiment 1 identifies an influenced phase in which a reduction means influences the CO2 emission amount, and recalculates the CO2 emission amount only for the influenced phase. This makes it possible to accurately predict the CO2 emission amount when the reduction means is introduced while reducing a processing time.

### *** Other Configurations ***

### <Variation 1>

In Embodiment 1, the functional components are realized by software. However, as Variation 1, the functional components may be realized by hardware. With regard to this Variation 1, differences from Embodiment 1 will be described.

When the functional components are realized by hardware, the emission amount calculation device 10 includes an electronic circuit in place of the processor 11, the memory 12, and the storage 13. The electronic circuit is a dedicated circuit that realizes the functions of the functional components, the memory 12, and the storage 13.

The electronic circuit is assumed to be a single circuit, a composite circuit, a programmed processor, parallel-programmed processors, a logic IC, a GA, an ASIC, or an FPGA. GA is an abbreviation for gate array. ASIC is an abbreviation for application specific integrated circuit. FPGA is an abbreviation for field-programmable gate array.

The functional components may be realized by a single electronic circuit, or the functional components may be distributed among and realized by a plurality of electronic circuits.

### <Variation 2>

As Variation 2, some of the functional components may be realized by hardware, and the rest of the functional components may be realized by software.

Each of the processor 11, the memory 12, the storage 13, and the electronic circuit is referred to as processing circuitry. That is, the functions of the functional components are realized by the processing circuitry.

"Unit" in the above description may be interpreted as "circuit", "step", "procedure", "process", or "processing circuitry".

### Embodiment 2.

Embodiment 2 differs from Embodiment 1 in that a newly added reduction means is set in the influence range information 34. In Embodiment 2, this difference will be described, and description of the same aspects will be omitted.

### *** Description of Configuration ***

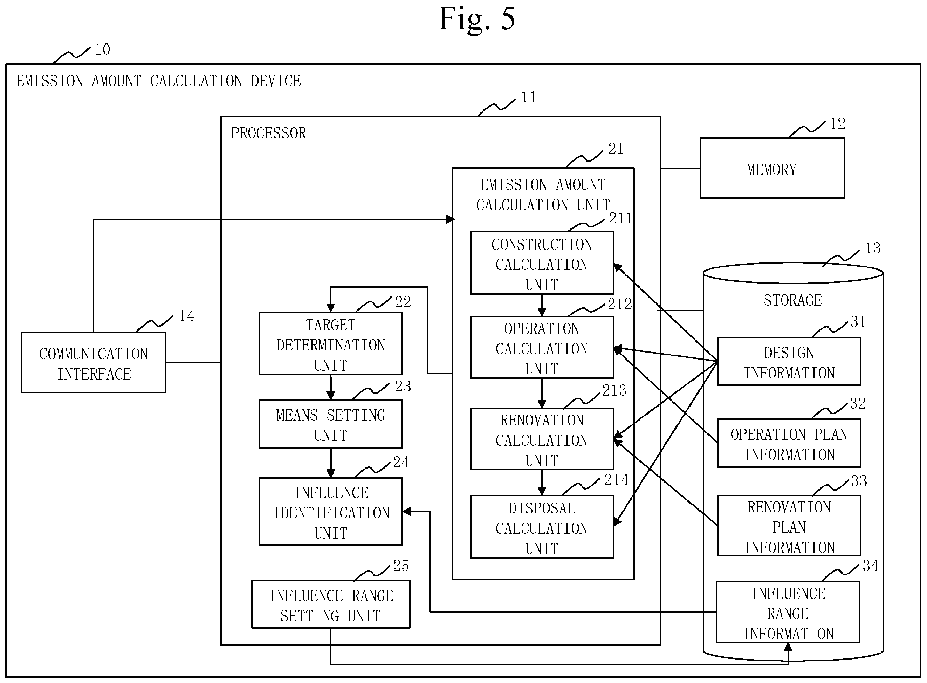

Referring to Fig. 5, a configuration of the emission amount calculation device 10 according to Embodiment 2 will be described.

The emission amount calculation device 10 differs from the emission amount calculation device 10 illustrated in Fig. 1 in that an influence range setting unit 25 is included as a functional component. The function of the influence range setting unit 25 is realized by software or hardware, like the other functional components.

### *** Description of Operation ***

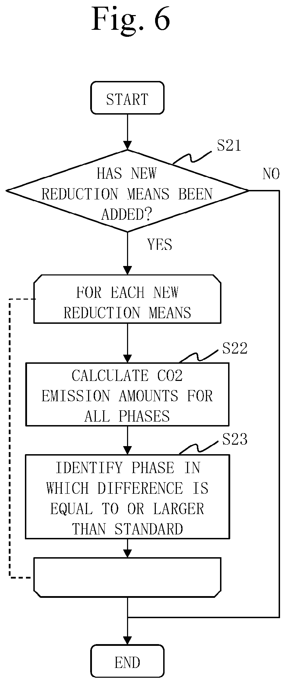

Referring to Fig. 6, a flow of processing by the emission amount calculation device 10 according to Embodiment 2 will be described.

The processes indicated in Fig. 6 are executed as preliminary preparation for the processes indicated in Fig. 2.

### (Step S21: New means determination process)

The influence range setting unit 25 determines whether a new reduction means has been added.

A new reduction means is set by the user at any time. At this time, the new reduction means is associated with one of the phases. If a new reduction means has been added, the influence range setting unit 25 advances the process to step S22. If no new reduction means has been added, the influence range setting unit 25 ends the process.

The processes of step S22 and step S23 are executed using each new reduction means as a target new reduction means.

### (Step S22: Emission amount calculation process)

The emission amount calculation unit 21 calculates the CO2 emission amount in each of the plurality of phases when the target new reduction means is applied to a past building, which is a building designed in the past. That is, the emission amount calculation unit 21 calculates the CO2 emission amounts when the target new reduction means is applied for all the phases.

The emission amount calculation unit 21 calculates the CO2 emission amounts when the target new reduction means is not applied to the past building. If the CO2 emission amounts when the target new reduction means is not applied are stored in the storage 13 or the like, the emission amount calculation unit 21 may read the stored CO2 emission amounts.

The case where the new reduction means is applied and the case where the target new reduction means is not applied are the same in principle, except for whether or not the new reduction means is applied.

### (Step S23: Influence range setting process)

For each of the plurality of phases other than the phase corresponding to the target new reduction means, the influence range setting unit 25 calculates a difference between the CO2 emission amount when the target new reduction means is applied and the CO2 emission amount when the new reduction means is not applied. The influence range setting unit 25 identifies, among the plurality of phases, a phase in which the difference is equal to or larger than a standard as a phase in which the new reduction means influences the CO2 emission amount.

Then, the influence range setting unit 25 adds the new reduction means to the influence range information 34. At this time, the influence range setting unit 25 sets a diagonal line for the phase corresponding to the new reduction means, sets "influence" (○) for each identified phase, and sets "no influence" (×) for the remaining phases.

### *** Effects of Embodiment 2 ***

As described above, when a new reduction means is added, the emission amount calculation device 10 according to Embodiment 2 identifies a phase that is influenced and adds the phase to the influence range information 34. This makes it possible to appropriately identify a phase that is influenced also when a new reduction means is added.

### Embodiment 3.

Embodiment 3 differs from Embodiments 1 and 2 in that, with regard to the operation phase, equipment that is influenced is identified, and the CO2 emission amount is recalculated only for the identified equipment. In Embodiment 3, this difference will be described, and description of the same aspects will be omitted.

In Embodiment 3, a case where a function is added to Embodiment 1 will be described. However, the function can also be added to Embodiment 2.

### *** Description of Operation ***

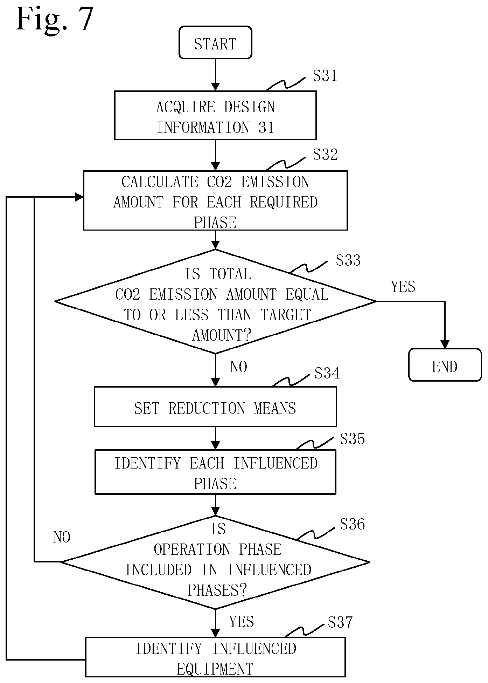

Referring to Fig. 7, a flow of processing by the emission amount calculation device 10 according to Embodiment 3 will be described.

The processes of step S31 to step S35 are the same as the processes of step S11 to step S15 in Fig. 2. However, in step S35, the influence identification unit 24 does not yet instruct the emission amount calculation unit 21 to recalculate the CO2 emission amount for each identified influenced phase.

### (Step S36: Operation phase determination process)

The influence identification unit 24 determines whether the operation phase is included in the influenced phases identified in step S35.

If the operation phase is included in the influenced phases, the influence identification unit 24 advances the process to step S37. If the operation phase is not included in the influenced phases, the influence identification unit 24 instructs the emission amount calculation unit 21 to recalculate the CO2 emission amount for each identified influenced phase, and returns the process to step S32. Then, in step S32, the emission amount calculation unit 21 recalculates the CO2 emission amount using the reduction means set in step S34.

### (Step S37: Equipment identification process)

The influence identification unit 24 identifies equipment that is influenced by the reduction means set in step S34 as influenced equipment.

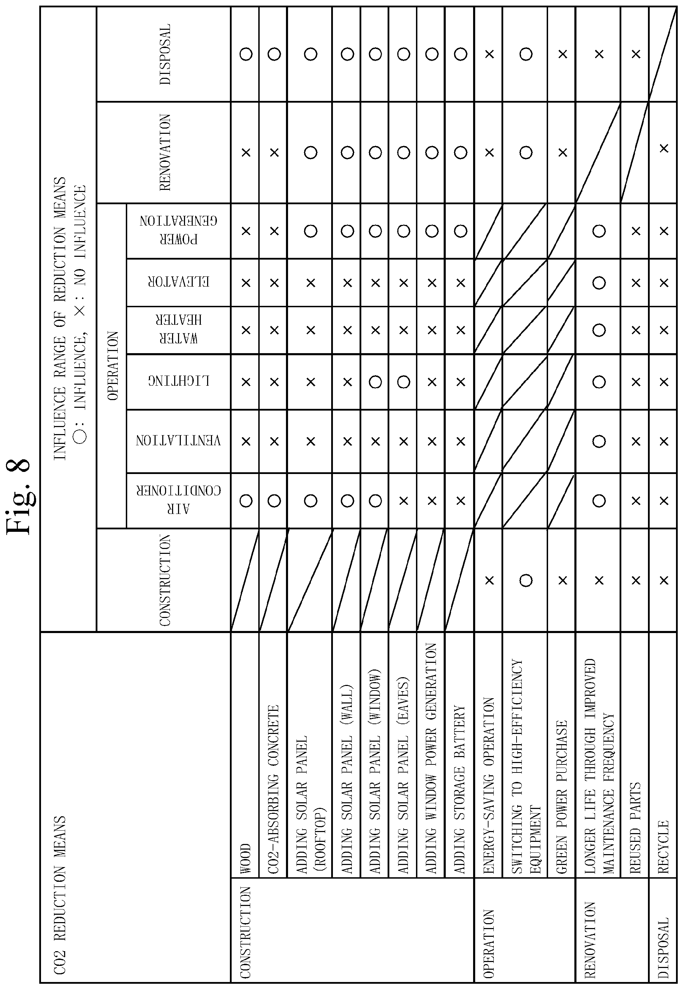

Specifically, the influence identification unit 24 identifies the influenced equipment by referring to the influence range information 34. As illustrated in Fig. 8, the influence range information 34 indicates phases in which each of a plurality of reduction means influences the CO2 emission amount, and also indicates the presence or absence of influence for each piece of equipment for the operation phase.

The influence identification unit 24 instructs the emission amount calculation unit 21 to recalculate the CO2 emission amount for each identified influenced phase, and returns the process to step S32. At this time, for the operation phase, the influence identification unit 24 instructs the emission amount calculation unit 21 to recalculate the CO2 emission amount by specifying the influenced equipment. Then, in step S32, the emission amount calculation unit 21 recalculates the CO2 emission amount using the reduction means set in step S34. For the operation phase, the emission amount calculation unit 21 recalculates the CO2 emission amount in the operation phase by recalculating the CO2 emission amount with regard to the influenced equipment.

### ***Effects of Embodiment 3 ***

As described above, for the operation phase, the emission amount calculation device 10 according to Embodiment 3 identifies influenced equipment for which a reduction means influences the CO2 emission amount, and recalculates the CO2 emission amount only for the influenced equipment. This makes it possible to accurately predict the CO2 emission amount when the reduction means is introduced while reducing a processing time, compared to the configuration of Embodiment 1.

### Embodiment 4.

Embodiment 4 differs from Embodiments 1 to 3 in that an area that is influenced is identified, and the CO2 emission amount is recalculated only for the identified area. In Embodiment 4, this difference will be described, and description of the same aspects will be omitted.

In Embodiment 4, a case where a function is added to Embodiment 1 will be described. However, the function can also be added to Embodiments 2 and 3.

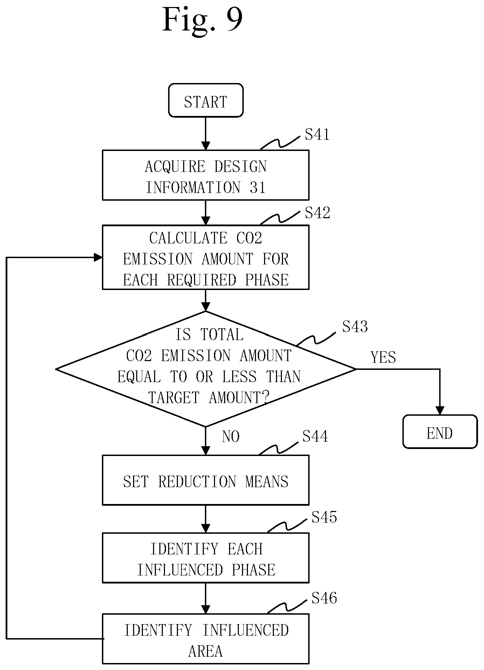

Referring to Fig. 9, a flow of processing by the emission amount calculation device 10 according to Embodiment 4 will be described.

The processes of step S41 to step S45 are the same as the processes of step S11 to step S15 in Fig. 2. However, in step S45, the influence identification unit 24 does not yet instruct the emission amount calculation unit 21 to recalculate the CO2 emission amount for each identified influenced phase.

### (Step S46: Area identification process)

The influence identification unit 24 identifies an area that is influenced by the reduction means set in step S44 as an influenced area as influenced equipment.

Specifically, the influence identification unit 24 identifies the influenced area by, for example, causing an area where the reduction means is to be introduced to be specified. For example, if a floor where the reduction means is to be introduced has been determined, the influence identification unit 24 identifies the floor where the reduction means is to be introduced as the influenced area.

The influence identification unit 24 instructs the emission amount calculation unit 21 to recalculate the CO2 emission amount for each identified influenced phase, and returns the process to step S42. At this time, the influence identification unit 24 instructs the emission amount calculation unit 21 to recalculate the CO2 emission amount by specifying the influenced area. Then, in step S42, the emission amount calculation unit 21 recalculates the CO2 emission amount by recalculating the CO2 emission amount in the influenced area using the reduction means set in step S44.

### *** Effects of Embodiment 4 ***

As described above, the emission amount calculation device 10 according to Embodiment 4 identifies an influenced area where a reduction means influences the CO2 emission amount, and recalculates the CO2 emission amount only for the influenced area. This makes it possible to accurately predict the CO2 emission amount when the reduction means is introduced while reducing a processing time, compared to the configuration of Embodiment 1.

### Embodiment 5.

Embodiment 5 differs from Embodiments 1 to 4 in that when the operation plan information 32 is changed due to a reducing means, the renovation plan information 33 is changed based on the changed operation plan information 32. In Embodiment 4, this difference will be described, and description of the same aspects will be omitted.

In Embodiment 5, a case where a function is added to Embodiment 1 will be described. However, the function can also be added to Embodiments 2 to 4.

### *** Description of Configuration ***

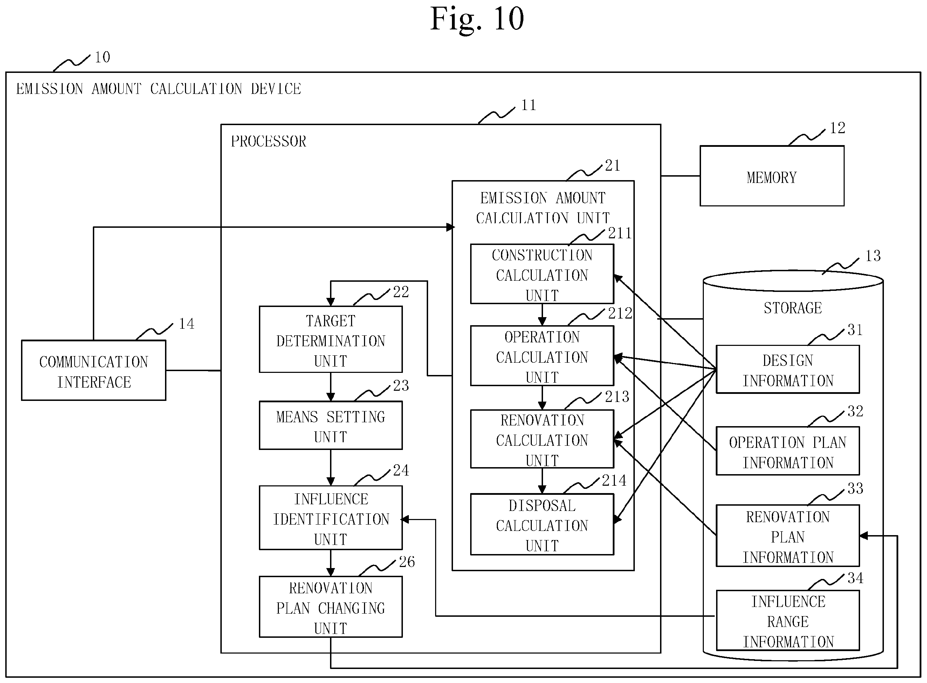

Referring to Fig. 10, a configuration of the emission amount calculation device 10 according to Embodiment 5 will be described.

The emission amount calculation device 10 differs from the emission amount calculation device 10 illustrated in Fig. 1 in that a renovation plan changing unit 26 is included as a functional component. The function of the renovation plan changing unit 26 is realized by software or hardware, like the other functional components.

### *** Description of Operation ***

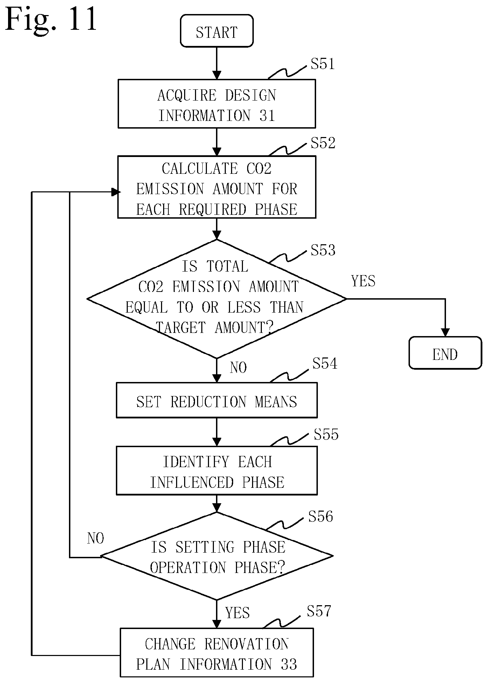

Referring to Fig. 11, a flow of processing by the emission amount calculation device 10 according to Embodiment 5 will be described.

The processes of step S51 to step S55 are the same as the processes of step S11 to step S15 in Fig. 2. However, in step S35, the influence identification unit 24 does not yet instruct the emission amount calculation unit 21 to recalculate the CO2 emission amount for each identified influenced phase.

### (Step S56: Operation phase determination process)

The influence identification unit 24 determines whether the setting phase corresponding to the reduction means set in step S54 is the operation phase.

If the setting phase is the operation phase, the influence identification unit 24 advances the process to step S37. If the setting phase is not the operation phase, the influence identification unit 24 instructs the emission amount calculation unit 21 to recalculate the CO2 emission amount for each identified influenced phase and returns the process to step S52. Then, in step S52, the emission amount calculation unit 21 recalculates the CO2 emission amount using the reduction means set in step S54.

### (Step S57: Renovation plan changing process)

The renovation plan changing unit 26 identifies an influence that a change in the operation phase due to the reduction means has on the renovation phase, and changes the plan for the renovation phase according to the identified influence. Specifically, the operation plan information 32 may be changed due to the reduction means. The renovation plan changing unit 26 identifies details of the change to the operation plan information 32 due to the reduction means, and changes the renovation plan information 33, which is the plan for the renovation phase, according to the identified details of the change.

For example, the renovation plan changing unit 26 may change the service life for each piece of equipment according to the operation plan, and change the renovation plan so that renovations are performed at a frequency according to the service life. The service lives of building equipment such as an air-conditioner, a ventilation system, and a lighting system vary depending on the operation plan. As a specific example, equipment that operates 24 hours a day has a short service life, but the service life can be extended by shortening the operating hours. Equipment that is switched on and off or has setting changes frequently has a short service life, but the service life can be extended by reducing the frequency of switching on and off or setting changes. If the service life is extended, the frequency of renovations can be reduced.

The influence identification unit 24 instructs the emission amount calculation unit 21 to recalculate the CO2 emission amount for each identified influenced phase, and returns the process to step S52. Then, in step S52, the emission amount calculation unit 21 recalculates the CO2 emission amount by recalculating the CO2 emission amount using the reduction means set in step S54. At this time, the emission amount calculation unit 21 recalculates the CO2 emission amount for the renovation phase based on the changed plan.

### ***Effects of Embodiment 5 ***

As described above, when the operation plan information 32 is changed due to a reduction means, the emission amount calculation device 10 according to Embodiment 5 changes the renovation plan information 33 based on the changed operation plan information 32. As a result, the CO2 emission amount is calculated based on an appropriate renovation plan, making it possible to accurately calculate the CO2 emission amount.

The embodiments and variations of the present disclosure have been described above. Two or more of these embodiments and variations may be implemented in combination. Alternatively, one or more of these may be partially implemented. The present disclosure is not limited to the above embodiments and variations, and various modifications can be made as necessary.

### Reference Signs List

10: emission amount calculation device; 11: processor; 12: memory; 13: storage; 14: communication interface; 21: emission amount calculation unit; 211: construction calculation unit; 212: operation calculation unit; 213: renovation calculation unit; 214: disposal calculation unit; 22: target determination unit; 23: means setting unit; 24: influence identification unit; 25: influence range setting unit; 26: renovation plan changing unit; 31: design information; 32: operation plan information; 33: renovation plan information; 34: influence range information.

## Claims

1. An emission amount calculation device comprising:
an emission amount calculation unit to calculate a CO2 emission amount in each of a plurality of phases from construction to disposal of a target building;
a means setting unit to set a reduction means that has an effect of reducing a CO2 emission amount for a setting phase, which is one phase of the plurality of phases; and
an influence identification unit to identify an influenced phase in which the reduction means set by the means setting unit influences a CO2 emission amount, the influenced phase including a phase other than the setting phase,
wherein the emission amount calculation unit recalculates a CO2 emission amount for the influenced phase identified by the influence identification unit, using the reduction means set by the means setting unit.

2. The emission amount calculation device according to claim 1, further comprising
a target determination unit to determine whether a total amount of the CO2 emission amounts in individual phases of the plurality of phases calculated by the emission amount calculation unit is equal to or less than a target amount,
wherein the means setting unit sets a new reduction means until the total amount is determined to be equal to or less than the target amount by the target determination unit.

3. The emission amount calculation device according to claim 1 or 2,
wherein for each reduction means of a plurality of reduction means, the influence identification unit identifies the influenced phase for the reduction means by referring to influence range information indicating a phase in which a CO2 emission amount is influenced.

4. The emission amount calculation device according to claim 3,
wherein when a new reduction means is added, the emission amount calculation unit calculates, with regard to a past building, which is a building designed in the past, a CO2 emission amount in each of the plurality of phases when the new reduction means is applied to the past building, and
wherein the emission amount calculation device further comprises
an influence range setting unit to add a phase, among the plurality of phases, in which a difference between a CO2 emission amount when the new reduction means is applied and a CO2 emission amount when the new reduction means is not applied is equal to or larger than a standard to the influence range information as a phase in which the new reduction means influences a CO2 emission amount.

5. The emission amount calculation device according to any one of claims 1 to 4,
wherein the plurality of phases include an operation phase in which the target building is operated,
wherein when the operation phase is included in the influenced phase, the influence identification unit identifies equipment that is influenced by the reduction means among equipment used in the operation phase, as influenced equipment, and
wherein for the operation phase, the emission amount calculation unit recalculates a CO2 emission amount in the operation phase by recalculating the CO2 emission amount with regard to the influenced equipment.

6. The emission amount calculation device according to any one of claims 1 to 5,
wherein the influence identification unit identifies an area in the target building that is influenced by the reduction means, as an influenced area, and
wherein the emission amount calculation unit recalculates a CO2 emission amount in the influenced phase by recalculating a CO2 emission amount in the influenced area for the influenced phase.

7. The emission amount calculation device according to any one of claims 1 to 6,
wherein the plurality of phases include an operation phase in which the target building is operated and a renovation phase in which the target building is renovated,
wherein the emission amount calculation device further comprises
a renovation plan changing unit to, when the setting phase is the operation phase, identify an influence that a change in the operation phase due to the reduction means has on the renovation phase, and change a plan for the renovation phase according to the influence that has been identified, and
wherein when the plan for the renovation phase is changed by the renovation plan changing unit, the emission amount calculation unit recalculates the CO2 emission amount based on the changed plan for the renovation phase.

8. An emission amount calculation method comprising:
calculating a CO2 emission amount in each of a plurality of phases from construction to disposal of a target building, by a computer;
setting a reduction means that has an effect of reducing a CO2 emission amount for a setting phase, which is one phase of the plurality of phases, by the computer;
identifying an influenced phase in which the reduction means influences a CO2 emission amount, the influenced phase including a phase other than the setting phase, by the computer; and
recalculating a CO2 emission amount for the influenced phase using the reduction means, by the computer.

9. An emission amount calculation program that causes a computer to function as an emission amount calculation device to perform:
an emission amount calculation process of calculating a CO2 emission amount in each of a plurality of phases from construction to disposal of a target building;
a means setting process of setting a reduction means that has an effect of reducing a CO2 emission amount for a setting phase, which is one phase of the plurality of phases; and
an influence identification process of identifying an influenced phase in which the reduction means set by the means setting process influences a CO2 emission amount, the influenced phase including a phase other than the setting phase,
wherein the emission amount calculation process recalculates a CO2 emission amount for the influenced phase identified by the influence identification process, using the reduction means set by the means setting process.
